# EUROPEAN PATENT APPLICATION

(11) **EP 1 908 975 A1**
(43) Date of publication of application: **09.04.2008**
(21) Application number: 06781571.2
(22) Date of filing: 25.07.2006
(51) Int. Cl.: F16D 3/06, B62D 1/20

(54) **EXTENSIBLE SHAFT AND STEERING DEVICE FOR VEHICLE**

(30) Priority: 26.07.2005 JP 2005216180
(71) Applicant: JTEKT Corporation, Osaka-shi Osaka 542-8502 (JP)
(72) Inventor: TOKIOKA, Ryoichi, c/o JTEKT Corportaion, Osaka-shi, Osaka 542-8502 (JP); UEDA, Hiroji, c/o JTEKT Corporation, Osaka-shi, Osaka 542-8502 (JP)
(74) Representative: Steil, Christian
(86) International application number: PCT/JP2006/314659
(87) International publication number: WO 2007/013446

(57) **Abstract**

An extendable shaft (5), comprising an inner shaft (12) and a tubular outer shaft (13) fitted axially relatively movable so that a torque can be transmitted to each other. A plurality of balls (14) aligned are interposed between the corresponding raceway grooves (15, 16) of the inner shaft (12) and the outer shaft (13). Each of the raceway grooves (15, 16) has a predetermined cross section. As a result, the contact angle (Al) of the balls (14) to the raceway grooves (15, 16) is zero at no-load and can be gradually increased according to an increase in load torque.

## Description

### Technical Field

The present invention relates to an extendable shaft and a motor vehicle steering apparatus using the same.

### Background Art

The extendable shaft mentioned above may be used, for example, as a steering shaft of an automobile.
The extendable shaft is also used as an intermediate shaft connecting the steering shaft and a steering mechanism such as a rack and pinion mechanism of the automobile. In this case, an extending function of the extendable shaft is utilized for adjusting the length of the intermediate shaft in order to accommodate relative displacement between a steering gear and a steering column during vehicle travel. Alternatively, the extending function is utilized for adjusting the length of the intermediate shaft being assembled in the motor vehicle.

As to the extendable shaft of this type, an extendable shaft has been proposed such that a plurality of rollable balls interposed between corresponding axial grooves of an inner shaft and a tubular outer shaft to fit both of the shafts (see, for example, Patent Document 1).
Patent Document 1: Japanese Unexamined Patent Publication No.2001-50293

### Disclosure of the Invention

### Problems to Be Solved by the Invention

In the extendable shaft of Patent Document 1, the balls are in four-point contact having two-point contact with each of the inner shaft and the outer shaft. That is, the balls have a contact angle of about 45° having angular contact with the shafts.
In the case where the balls are in the four-point contact, the extendable shaft exhibits a high torsional rigidity when a transmission torque between the inner shaft and the outer shaft is small. Therefore, the extendable shaft is more liable to transmit vibrations from road surface to a handle (steering wheel) via the steering shaft, adversely affecting the ride comfort of the vehicle. This also causes the vehicle to respond to a steering operation by a driver so quickly that the vehicle is excessively increased in steering response.

As a solution, it may be possible to use a rubber damper, for example. In this case, however, a manufacture cost is increased.
In the case where the balls are in the four-point contact, the contact angle of the balls is not varied so much by varying the amount of preload on the balls when the transmission torque between the inner shaft and the outer shaft is small. It is, therefore, difficult to adjust the torsional rigidity.

The invention seeks to provide an extendable shaft which can reduce the vibrations associated with the small transmission torque and can realize a favorable steering response in a case where the shaft is applied to the steering shaft or the intermediate shaft of the motor vehicle steering apparatus.

### Means for Solving the Problems

In accordance with a preferred aspect of the invention, this object is accomplished in an extendable shaft which comprises: an inner shaft and a tubular outer shaft fitted axially relatively movable and torque transmittable to each other; raceway grooves formed in an outer periphery of the inner shaft and in an inner periphery of the outer shaft and opposing each other; and a plurality of balls interposed between the opposing raceway grooves and axially aligned. Each of the raceway grooves has a predetermined cross section so that a contact angle of the balls to each of the raceway grooves is zero at no-load and progressively increased with an increase of load torque.

The aspect can decrease torsional rigidity in a region where a torque is applied. Therefore, in a case where the extendable shaft of the embodiment is applied to a steering shaft or an intermediate shaft of a motor vehicle steering apparatus, it is possible to effectively absorb the vibrations from road surface. Accordingly, it is possible to reduce handle vibrations so that the ride comfort is improved. Furthermore, there is no need for using the rubber damper for vibration reduction so that the manufacture costs may be reduced. Further, an excessive increase of steering response can be avoided.

Since the contact angle of the balls is progressively increased with the increase of the load torque, the extendable shaft can ensure a required torsional rigidity when the transmission torque is large. Further, the torsional rigidity may be easily adjusted by defining the amount of preload, for example. Therefore, the extendable shaft may easily achieve a torsional rigidity according to a steering rigidity required of each of the motor vehicles. As a result, the extendable shaft can realize a favorable steering response.

The predetermined cross section of each of the raceway grooves may preferably have a curvature radius progressively increased with the increase of the contact angle, because the torsional rigidity can be progressively increased with the increase of the load torque.
It is also preferred that the predetermined cross section of each of the raceway grooves has a constant curvature radius, because the torsional rigidity can be progressively increased with an increase of the load torque.

It is preferred that the balls are radially preloaded between the inner shaft and the outer shaft, because the torsional rigidity may be easily adjusted by defining the amount of preload, as described above.
It is preferable that a motor vehicle steering apparatus transmits a steering torque of a steering member by using the above extendable shaft.

### Brief Description of the Drawings

FIG. 1 is a schematic diagram showing an arrangement of a motor vehicle steering apparatus wherein an extendable shaft according to one embodiment of the invention is applied to an intermediate shaft;
FIG.2 is a sectional view of the above intermediate shaft;
FIG.3 is a sectional view taken on the line III-III in FIG.2;
FIG.4A is a schematic diagram enlarging a principal part of FIG.2, to show an unloaded state of the intermediate shaft;
FIG.4B is a schematic diagram enlarging the principal part of FIG.2, to show a loaded state of the intermediate shaft; and
FIG.5 is a graph showing a relation between a torsion angle and a transmission torque.

### Embodiment of the Invention

A preferred embodiment of the invention will described with reference to the accompanying drawings.

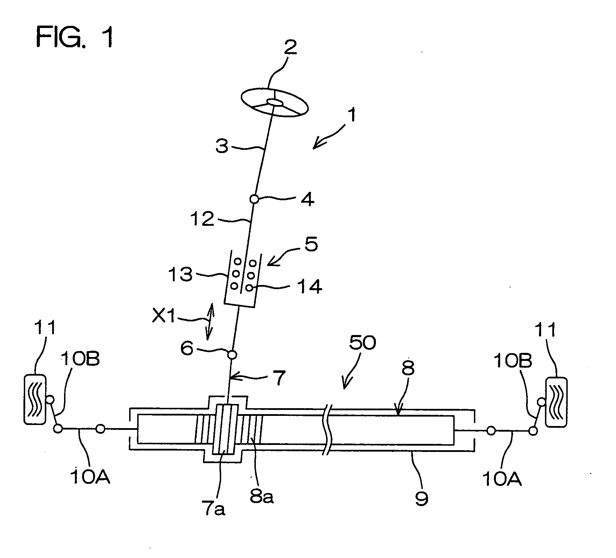

FIG. 1 is a schematic diagram showing an arrangement of a motor vehicle steering apparatus wherein an extendable shaft according to one embodiment of the invention is applied to an intermediate shaft. A motor vehicle steering apparatus 1 comprises: a steering shaft 3 coupled to a steering member 2 such as a steering wheel; and an intermediate shaft 5 as the extendable shaft coupled to the steering shaft 3 via a universal joint 4. The motor vehicle steering apparatus 1 further includes: a pinion shaft 7 coupled to the intermediate shaft 5 via a universal joint 6; and a rack bar 8 including rack teeth 8a meshed with pinion teeth 7a provided in vicinity of an end of the pinion shaft 7 and serving as a steerable shaft extending transversely of a motor vehicle. The above pinion shaft 7 and the rack bar 8 constitute a steering mechanism 50 comprising a rack and pinion mechanism.

While the embodiment is described with reference to a case where the extendable shaft is applied to the intermediate shaft 5, it is also possible to apply the extendable shaft of the present invention to the steering shaft 3 so as to impart a telescopic adjustment function and an impact absorbing function to the steering shaft 3.
The rack bar 8 is linearly reciprocally held in a housing 9 fixed to a vehicle body via a plurality of bearings which are not shown. Both ends of the rack bar 8 project toward both sides of the housing 9. Each of the ends of the rack bar 8 is connected with each corresponding tie rod 10A. Each of the tie rods 10A is coupled to a corresponding road wheel 11 via a corresponding knuckle arm 10B.

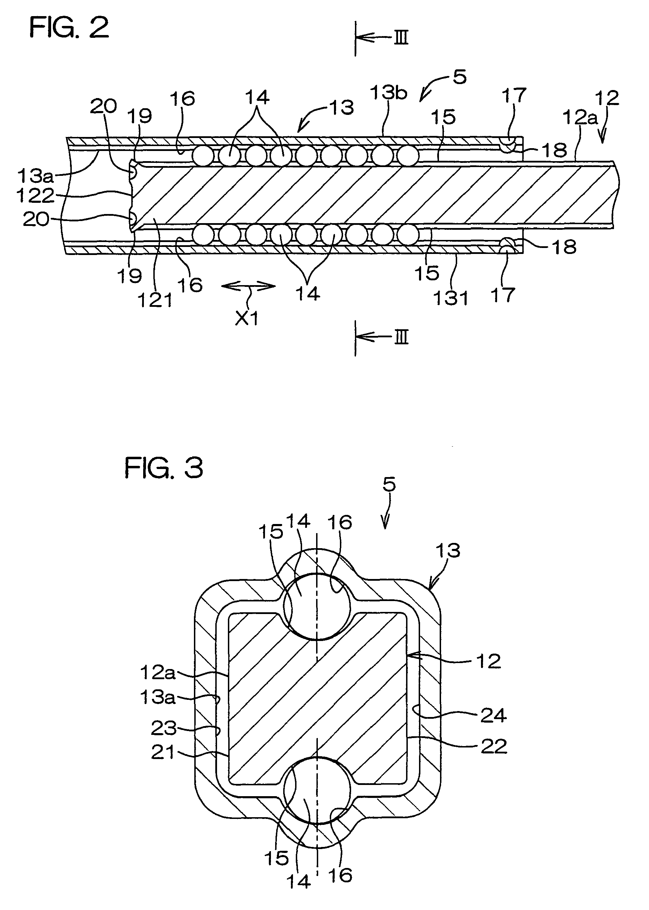

The intermediate shaft 5 includes: an inner shaft 12 as an upper shaft; and a tubular outer shaft 13 as a lower shaft. The inner shaft 12 and the outer shaft 13 are fitted to each other in a manner to be slidable in an axial direction X1 and torque transmittable to each other via balls 14, each of which provides a rolling element as a torque transmission element.
Referring to FIG.2 showing the intermediate shaft 5 in section and FIG.3 showing a cross section taken on the line III-III in FIG.2, a detailed description is made on the intermediate shaft 5.

As shown in FIG.2 and FIG.3, an outer periphery 12a of the inner shaft 12 and an inner periphery 13a of the outer shaft 13 are formed with at least a pair of raceway grooves 15, 16 extending along the axial direction X1. The raceway groove 15 and raceway groove 16 in paired relation oppose each other with respect to a radial direction of both shafts 12, 13. The aforesaid balls 14 are interposed between the paired raceway groove 15 and the raceway groove 16. Raceways for the balls 14 are directly formed in the respective inside surfaces of the raceway grooves 15, 16.

As shown in FIG.2, the balls 14 are aligned extending along the axial direction X1 of the shafts 12, 13. While a cage formed with holes for retaining the individual balls 14 aligned may be provided, the embodiment is described by way of example where the cage is not provided.
A projection 18 is formed on the inner periphery 13a of an end 131 of the tubular outer shaft 13 at place corresponding to the raceway groove 16 of the outer shaft 13. When a recess 17 is formed by applying pressure to an outer periphery 13b of the outer shaft 13, this projection 18 is concurrently formed by plastically deforming the inner periphery 13a of the outer shaft 13. On the other hand, a projection 19 is formed on the outer periphery 12a of an end 121 of the inner shaft 12 at place corresponding to the raceway groove 15 of the inner shaft 12. When a recess 20 is formed by applying pressure to an end face 122 of the inner shaft 12, the projection 19 is concurrently formed by plastically deforming the outer periphery 12a of the inner shaft 12.

In the state where the balls 14 are interposed between the paired raceway grooves 15, 16, as shown in FIG.3, the tubular outer shaft 13 is elastically increased in diameter so that the balls 14 are radially inwardly biased by an elastic restorative force of the outer shaft 13. As a result, the balls 14 are elastically clamped between the inner shaft 12 and the outer shaft 13. That is, the balls 14 are interposed between the inner shaft 12 and the outer shaft 13 as radially preloaded. The inner shaft 12 and the outer shaft 13 are circumferentially elastically coupled to each other via the preloaded balls 14.

The outer periphery 12a of the inner shaft 12 is formed with a pair of opposite flat planes 21, 22 defining a width across flat therebetween. The inner periphery 13a of the outer shaft 13 is formed with regulating portions 23, 24 which individually engage with the corresponding flat planes 21, 22 of the inner shaft 12 for regulating the amount of relative rotation between the inner shaft 12 and the outer shaft 13. Specifically, when the transmission torque of the intermediate shaft 5 is relatively small, torque is transmitted between the inner shaft 12 and the outer shaft 13 by way of the balls 14. On the other hand, when the transmission torque is increased to exceed a predetermined level, the torque is transmitted by way of the balls 14 and the regulating members 23, 24.

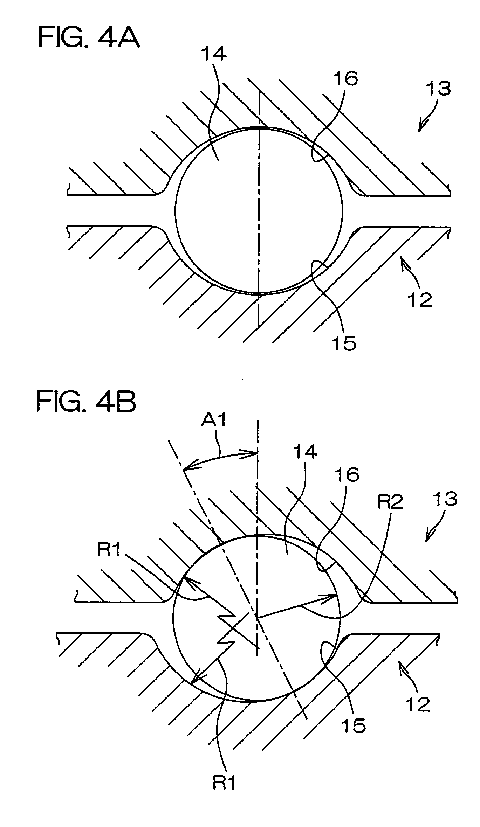

The cross sections of the raceway grooves 15, 16 are formed such that a contact angle A1 of the balls 14 on the raceway grooves 15, 16 is zero at no-load, as shown in FIG.4A, and that the contact angle A1 of the balls 14 is increased when the intermediate shaft 5 receives a load torque, as shown in FIG.4B. Specifically, a respective curvature radius R1 of each of the raceway grooves 15, 16 is larger than a curvature radius R2 of the balls 14 such that the contact angle A1 of the balls 14 may be progressively increased with the increase of the load torque.

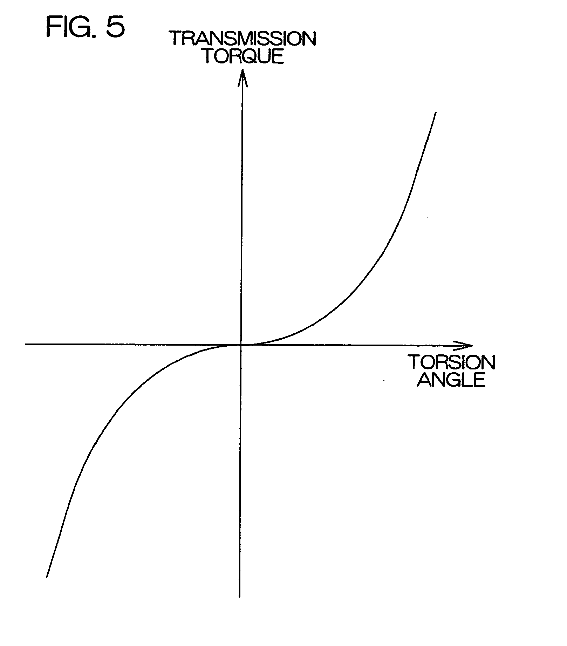

FIG.5 shows a relation between the torsion angle between the inner shaft 12 and the outer shaft 13 and the transmission torque in the above intermediate shaft 5. In a region of relatively small transmission torque, the increment rate of the torsion angle is relatively large to the increment of the transmission torque and, the torsional rigidity is relatively low. In a region of relatively large transmission torque, on the other hand, the increment rate of the torsion angle is relatively small to the increment of the transmission torque and, the torsional rigidity is relatively high.

According to the embodiment, the contact angle A1 of the balls 14 at no-load is set to zero so that the torsional rigidity can be decreased in a region where a minor steering torque is applied. Therefore, it is possible to reduce the handle vibrations by effectively absorbing the vibrations from the road surface, thereby improving ride comfort. Further, there is no need for using the rubber damper, to reduce the vibrations, whereby manufacture costs can be reduced. In the region of the relatively small transmission torque, the torsional rigidity is reduced as described above. Hence, the excessive increase of steering response can be avoided.

Further, the contact angle A1 of the balls is progressively increased with the increase of the load torque so that a required torsional rigidity can be ensured when the transmission torque is large. In addition, the mode of varying the torsional rigidity according to the increase of the transmission torque may be easily adjusted by defining the amount of preload, for example. Therefore, the extendable shaft may easily achieve a torsional rigidity according to a steering rigidity required of each of the motor vehicles. As a result, the extendable shaft is also capable of realizing a favorable steering response.

The cross sections of the raceway grooves 15, 16 may have a constant curvature radius R1 . Specifically, the cross sections of the raceway grooves 15, 16 may define arcuate shapes. In this case, there is an advantage of easy machining of the raceway grooves 15, 16.
Alternatively, the curvature radius R1 of the cross sections of the raceway grooves 15, 16 may be progressively increased with the increase of the contact angle A1 . In this case, the mode of varying the torsional rigidity according to the increase of the transmission torque may be easily adjusted. Specifically, a cross section of each raceway groove 15, 16 may have an elliptical shape, quadratic curve or cubic curve.

It is noted that the invention is not limited to the foregoing embodiment. A tubular shaft may be used as the inner shaft 12. While the above embodiment uses the two rows of balls, the balls may be arranged in three rows or four rows.
While the invention has been described in details with reference to the specific embodiment thereof, it is to be understood that changes, modifications and equivalents will occur to those skilled in the art who have understood the above contents. The scope of the invention, therefore, is defined by the appended claims and their equivalents.

The present application corresponds to Japanese Patent Application No.2005-216180 filed with Japanese Patent Office on July 26, 2005, and the whole disclosure thereof is incorporated herein by reference.

## Claims

1. An extendable shaft comprising:
an inner shaft and a tubular outer shaft fitted axially relatively movable and torque transmittable to each other,
raceway grooves formed in an outer periphery of the inner shaft and in an inner periphery of the outer shaft and opposing each other, and
a plurality of balls interposed between the mutually opposing raceway grooves and axially aligned,
each of the raceway grooves having a predetermined cross section so that a contact angle of the balls to each of the raceway grooves is zero at no-load and is progressively increased with an increase of load torque.

2. The extendable shaft according to Claim 1, wherein the predetermined cross section of each of the raceway grooves has a curvature radius progressively increased with an increase of the contact angle.

3. The extendable shaft according to Claim 1, wherein the predetermined cross section of each of the raceway grooves has a constant curvature radius.

4. The extendable shaft according to Claim 1, wherein the balls are radially preloaded between the inner shaft and the outer shaft.

5. A motor vehicle steering apparatus transmitting a steering torque of a steering member by using an extendable shaft according to any one of Claims 1 to 4.
